# EUROPÄISCHE PATENTSCHRIFT

(11) **EP 3 675 981 B1**
(45) Veröffentlichungstag und Bekanntmachung des Hinweises auf die Patenterteilung: **16.06.2021**
(21) Anmeldenummer: 18804583.5
(22) Anmeldetag: 16.11.2018
(51) Int. Cl.: B01D 35/00, B60K 15/04, B60K 15/03

(54) **VERSCHLUSSVORRICHTUNG FÜR EINEN FLUIDBEHÄLTER**
CLOSURE DEVICE FOR A FLUID CONTAINER
DISPOSITIF DE FERMETURE POUR UN RÉCIPIENT DE FLUIDE

(30) Priorität: 21.11.2017 DE 102017010728
(43) Veröffentlichungstag der Anmeldung: 08.07.2020
(73) Patentinhaber: Hydac Filtertechnik GmbH, 66280 Sulzbach/Saar (DE)
(72) Erfinder: KERBER, Michael, 66663 Merzig (DE)
(74) Vertreter: Bartels und Partner, Patentanwälte
(86) Internationale Anmeldenummer: PCT/EP2018/081495
(87) Internationale Veröffentlichungsnummer: WO 2019/101631

(56) Entgegenhaltungen:
- DE-A1-102008 053 777
- US-A1- 2007 108 212
- US-A1- 2013 160 503

## Beschreibung

Die Erfindung betrifft eine Verschlussvorrichtung für einen Fluidbehälter, insbesondere einen Hydrauliktank, mit den Merkmalen im Oberbegriff von Anspruch 1.

Verschlussvorrichtungen dieser Art sind Stand der Technik. Die DE 44 12 222 A1 offenbart beispielsweise eine Verschlussvorrichtung dieser Art zur Verwendung an Hydrauliktanks bei Baumaschinen oder dergleichen. Da Baumaschinen und dergleichen häufig unbeaufsichtigt sind, beispielsweise nachts auf Baustellen verbleiben, besteht die Gefahr, dass unbefugte Personen, etwa bei Neigung zu Vandalismus, sich durch Abnehmen des Deckels Zugriff zur Tank- oder Behälteröffnung verschaffen und Schmutz oder sonstige Fremdstoffe in den Tank einfüllen, um die Bau- oder Arbeitsmaschine zu beschädigen.

Als Sicherheitseinrichtung, die diesem Übel begegnen will, sieht die vorstehend genannte, bekannte Lösung vor, dass der Deckel mit dem Unterteil ständig endlos frei drehbar verbunden ist. Durch die freigebbare Verbindung ist bei der bekannten Lösung tatsächlich verhindert, dass durch Drehen des Deckels ein Herausschrauben des Unterteils aus der Behälteröffnung bewirkt werden kann, so dass der Deckel zusammen mit den genannten, übrigen Systembestandteilen an der Behälteröffnung schützend verbleibt.

Um ein autorisiertes Einschrauben oder Abschrauben der Verschlussvorrichtung von der Behälteröffnung zu ermöglichen, sieht die bekannte Lösung am Unterteil und am Deckel miteinander korrespondierende Ausnehmungen vor, die durch Verdrehung des Deckels aufeinander ausrichtbar sind. Durch ein in die miteinander fluchtenden Ausnehmungen eingeführtes stiftförmiges Werkzeug sind Deckel und Unterteil drehfest miteinander verbindbar, so dass das Unterteil durch Drehen des Deckels mit der Behälteröffnung verschraubbar oder von dieser abschraubbar ist.

Die bekannte Lösung ist in mehrerer Hinsicht nachteilig. Die Möglichkeit der Herstellung der drehfesten Verbindung mittels eines stiftförmigen Werkzeugs stellt keinen ausreichenden Schutz gegen Vandalismus zur Verfügung, weil stiftförmige Gegenstände allgemein verfügbar und auf Baustellen, beispielsweise in Form eines Nagels, vorhanden sind. Um eine unberechtigte Drehverriegelung zu erschweren, sieht die bekannte Lösung daher vor, dass zumindest eine der aufeinander ausrichtbaren Ausnehmungen ein von der Form einer zylindrischen Bohrung abweichendes Profil besitzt und dementsprechend für das Werkzeug eine entsprechende Profilierung vorgesehen ist. Zum einen besteht die Gefahr, dass das spezielle Werkzeug auf der Baustelle verloren geht, andererseits besteht die Gefahr, dass die Sicherung durch Benutzung eines unprofilierten, einen ausreichend kleinen Durchmesser aufweisenden Stiftes, wie eines dünnen Nagels, überwunden wird.

Die US 2013/0160503 A1 beschreibt eine Verschlussvorrichtung für einen Fluidbehälter, insbesondere einen Hydrauliktank, mit den Merkmalen im Oberbegriff von Anspruch 1 mit einem an dessen Behälteröffnung anbringbaren Unterteil und einem Deckelteil, das in einer freigebenden Funktionsstellung frei drehbar auf dem Unterteil gehalten ist und in einer weiteren verriegelnden Funktionsstellung mittels einer Sicherheitseinrichtung unter Verbindung von Deckel- mit Unterteil die Freigabe der Behälteröffnung ermöglicht, wobei die Sicherheitseinrichtung durch eine magnetfelderzeugende Einrichtung betätigbar ist, die mittels Magnetkraft die weitere verriegelte Funktionsstellung von Deckel- mit Unterteil herstellt.

Weitere Verschlussvorrichtungen gehen aus der DE 10 2008 053 777 A1 und der US 2007/0108212 A1 hervor.

Im Hinblick auf diese Problematik liegt der Erfindung die Aufgabe zugrunde, eine Verschlussvorrichtung der eingangs genannten Gattung zur Verfügung zu stellen, die bei einfachem Aufbau eine erhöhte Sicherheit gegen missbräuchliche Eingriffe (Vandalismus) bietet.

Erfindungsgemäß ist diese Aufgabe durch eine Verschlussvorrichtung gelöst, die die Merkmale des Patentanspruchs 1 in seiner Gesamtheit aufweist.

Danach sieht die Erfindung als wesentlichen Unterschied zum Stand der Technik vor, dass das Deckelteil eine Belüftungs- und/oder eine Filter¬einrichtung umschließt; und dass für die Verbindung zwischen Deckelteil und Unterteil das Deckelteil in der Nähe eines Öffnungsrandes eine sich an der Innenseite über den gesamten Umfang erstreckende, radial vertiefte Ringnut aufweist, die mit einem am Unterteil radial vorstehenden Ringkörper verklipt ist.

Es ist ferner vorgesehen, dass die Sicherheitseinrichtung durch eine magnetfelderzeugende Einrichtung betätigbar ist, die mittels Magnetkraft die weitere verriegelte Funktionsstellung von Deckel- mit Unterteil herstellt. Die durch Magnetkraft erfolgende Betätigung der Sicherheitseinrichtung vermeidet die Nachteile und Sicherheitsrisiken, wie sie beim Stand der Technik aufgrund der Möglichkeit gegeben sind, dass die nicht autorisierte Betätigung auch durch Werkzeuge ohne Kodierung erfolgreich durchgeführt werden kann, beispielsweise indem ein zur autorisierten Betätigung vorgesehenes, profiliertes stiftförmiges Werkzeug durch ein einfaches Mittel, beispielsweise in Form eines dünnen Nagels, ersetzt wird.

Bei vorteilhaften Ausführungsbeispielen weist die Sicherheitseinrichtung ein Verriegelungsteil auf, das in der einen Funktionsstellung entriegelt in einer Aufnahme im Unterteil verschiebbar geführt ist und in der weiteren Funktionsstellung unter der Einwirkung der Magnetkraft zumindest teilweise aus der Aufnahme herausfahrend in verriegelnden Eingriff mit einer zuordenbaren Aufnahme im Deckelteil gelangt. Bei aus einem ferromagnetischen Werkstoff bestehenden Verriegelungsteil ist dieses unmittelbar durch Eingriff der Magnetkraft verfahrbar.

Mit besonderem Vorteil kann die Anordnung derart getroffen sein, dass die magnetfelderzeugende Einrichtung von außen her auf das Deckelteil aufgesetzt das Verriegelungsteil von seiner einen Funktionsstellung in die weitere Funktionsstellung bringt.

Bei besonders vorteilhaften Ausführungsbeispielen, bei denen das Verriegelungsteil bei der normalen Einbaulage der Verschlussvorrichtung zumindest näherungsweise in Vertikalrichtung bewegbar geführt ist, gelangt ohne die von der magnetfelderzeugenden Einrichtung ausgeübte Magnetkraft das Verriegelungsteil schwerkraftbedingt von der weiteren verriegelten in die entriegelte Funktionsstellung. Die Sicherheitseinrichtung zeichnet sich hierbei durch eine besonders einfache Bauweise aus.

Die Anordnung kann mit besonderem Vorteil so getroffen sein, dass das Verriegelungsteil aus einem metallischen Verriegelungsstift gebildet ist, dass die Aufnahmen für den Verriegelungsstift aus zylindrischen, in Deckung miteinander bringbaren Führungen gebildet sind, und dass die magnetfelderzeugende Einrichtung aus einem Permanentmagneten gebildet ist.

Die Sicherheitseinrichtung kann mit besonderem Vorteil so ausgebildet sein, dass im verriegelten Zustand, bei dem Deckelteil und Unterteil miteinander zumindest drehfest verbunden sind, mit einer Aufschraubbewegung des Deckelteils das Unterteil in einen Befüll- oder Entnahmestutzen des Fluidbehälters einschraubbar ist und mit entgegengesetzter Drehrichtung des Deckelteils in einer Abschraubbewegung aus dem Stutzen unter Freigabe der Behälteröffnung abschraubbar ist.

Die Betätigung der Sicherheitseinrichtung gestaltet sich besonders einfach und bequem, wenn der Permanentmagnet auf oder entlang einer Markierung des Deckelteils auf dieses aufsetzbar ist.

Mit Vorteil kann die Anordnung hierbei so getroffen sein, dass die Markierung am Deckelteil eine Aufnahmemöglichkeit für den Permanentmagneten ausbildet, der vorzugsweise als Magnetring ausgebildet ist. Die Aufnahmemöglichkeit kann hierbei in Form eines in die Ringöffnung eingreifenden Vorsprungs am Deckelteil gebildet sein.

Bei vorteilhaften Ausführungsbeispielen übergreift das Deckelteil von außen her das Unterteil derart, dass der Deckelabschluss im Wesentlichen abstandsfrei in den Gewindeeingriff des Unterteils in den Stutzen derart übergeht, dass ein Angriff von Werkzeugen am Unterteil verhindert ist. Dadurch ist die Gefahr vermieden, dass bei frei drehbarem Deckelteil ein Ausschrauben des Unterteils durch Werkzeugangriff am Unterteil erfolgt, weil für das Einsetzen eines Drehwerkzeugs, wie eines Gabelschlüssels, kein ausreichender Freiraum zwischen Unterteil und Stutzen des Fluidbehälters vorhanden ist.

Das Unterteil kann mit Vorteil so ausgebildet sein, dass es die Belüftungs- und die Filtereinrichtung mit aufnimmt, wobei vorzugsweise die die Belüftungseinrichtung mit der Atmosphäre verbindende Öffnung an der Unterseite des Unterteils und damit in einem gegen Eindringen von Spritzwasser oder dergleichen geschützten Bereich gelegen ist.

Nachstehend ist die Erfindung anhand eines in der Zeichnung dargestellten Ausführungsbeispiels im Einzelnen erläutert. Es zeigen:
- Fig. 1: eine gegenüber einer praktischen Ausführungsform etwa 1½-fach vergrößert gezeichnete perspektivische Schrägansicht des Ausführungsbeispiels, wobei ein Teilbereich einer Seitenwand des Deckelteils vertikal aufgeschnitten und die Sicherheitseinrichtung in der freigebenden Funktionsstellung dargestellt ist;
- Fig. 2: einen zentralen Vertikalschnitt des Ausführungsbeispiels mit zur Schnittebene der Fig. 1 senkrecht verlaufender Schnittebene, wobei die freigebende Funktionsstellung der Sicherheitseinrichtung dargestellt ist;
- Fig. 3: eine der Fig. 1 entsprechende Darstellung, wobei die verriegelnde Funktionsstellung der Sicherheitseinrichtung dargestellt ist; und
- Fig. 4: eine der Fig. 2 entsprechende Darstellung, wobei die verriegelnde Funktionsstellung der Sicherheitseinrichtung dargestellt ist.

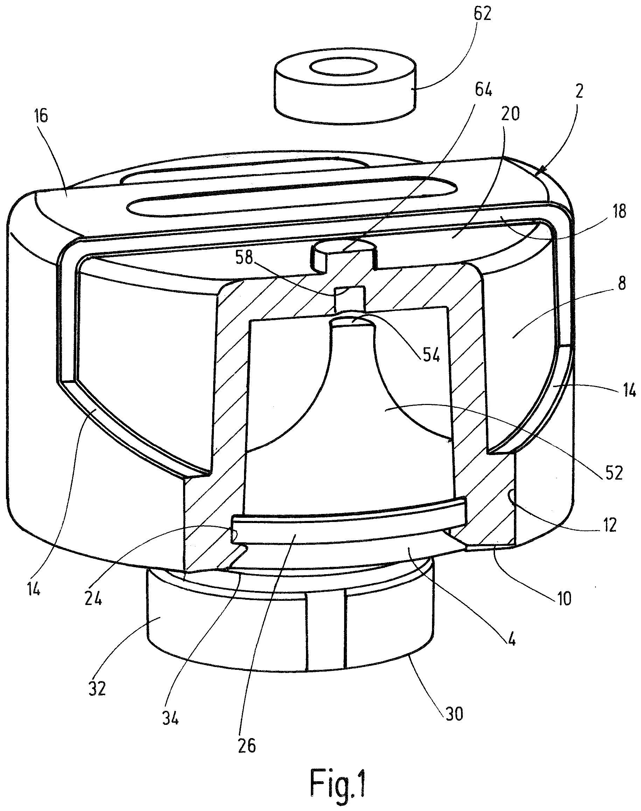

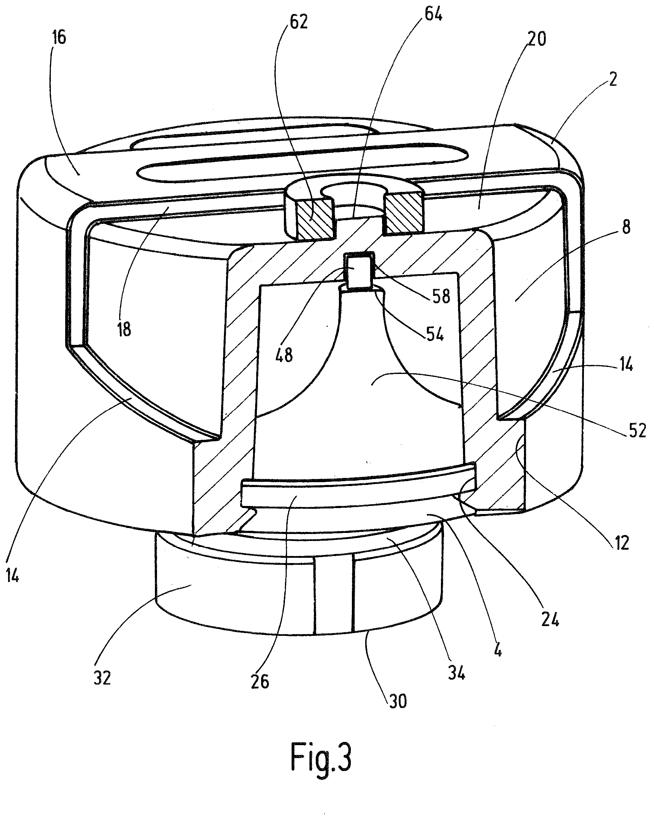

Das in den Figuren gezeigte Ausführungsbeispiel weist ein erstes Gehäusehauptteil in Form eines Deckelteils 2 und ein zweites Gehäusehauptteil in Form eines Unterteils 4 auf. Deckelteil 2 und Unterteil 4 sind jeweils aus einem Kunststoffwerkstoff, wie einem glasfaserverstärkten Polyamid, einteilig spritzgeformt. Das Deckelteil 2 hat die Form einer Haube mit einer kreiszylindrischen, zu einer Hochachse 6 konzentrischen, kreiszylindrischen Seitenwand 8, die eine an den unteren Öffnungsrand 10 sich anschließende Wandverdickung 12 aufweist. Wie die Fig. 1 und 3 zeigen, verläuft die Wandverdickung 12 mit bogenförmig gekrümmten Schrägflächen 14 nach oben und geht auf etwa halber Höhe des Deckelteils 2 in eine Leiste 16 mit geraden Seitenrändern 18 über, die sich, über eine kreisrunde Deckfläche 20 des Deckelteils 2 überstehend, über deren gesamte Breite erstreckt.

Durch die aus der Zylinderfläche der Seitenwand 8 vorstehenden Schrägflächen 14 der Wandverdickung 12 und die daran anschließende, vorstehende Leiste 16 ist die Außenkontur des Deckelteils 2 unrund und bildet dadurch Griffflächen, die ein bequemes manuelles Verdrehen des Deckelteils 2 ermöglichen und damit das manuelle Einschrauben oder Ausschrauben der Verschlussvorrichtung in einen oder aus einem (nicht gezeigten) Einfüllstutzen eines Fluidbehälters erleichtern.

Das Unterteil 4 bildet mit einer Kreisscheibe 22 den unteren Abschluss des Innenraums der Haube des Deckelteils 2 an dessen Öffnungsrand 10. Für die Verbindung zwischen Deckelteil 2 und Unterteil 4 weist das Deckelteil 2 in der Nähe des Öffnungsrandes 10 eine sich an der Innenseite über den gesamten Umfang erstreckende, radial vertiefte Ringnut 24 auf, die mit einem am Unterteil 4 radial vorstehenden Ringkörper 26 verklipt ist. Der Eingriff des Ringkörpers 26 in die Ringnut 24 bildet nicht nur die axiale Sicherung, sondern auch eine Drehlagerung, mittels deren das Deckelteil 2 am Unterteil 4 frei drehbar ist. Die Kreisscheibe 22 des Unterteils 4 weist einen koaxialen Durchgang 28 auf, der in einen axial nach unten vorstehenden Einschraubkörper 30 übergeht, der ein Außengewinde 32 zur Bildung der Schraubverbindung mit dem betreffenden, nicht gezeigten Befüllstutzen aufweist. Da das Deckelteil 2 mit seinem Öffnungsrand 10 die Kreisscheibe 22 des Unterteils 4 übergreift, ist bei in den (nicht gezeigten) Befüllstutzen eingeschraubtem Einschraubkörper und gebildeter Abdichtung mittels eines Dichtringes 34 im Wesentlichen kein oder nur ein geringer Abstand zwischen Unterteil 4 und Befüllstutzen vorhanden, so dass kein Freiraum für das Einsetzen eines Drehwerkzeugs, wie eines Gabelschlüssels, verbleibt, mit dem das Unterteil 4 unautorisiert gedreht werden könnte.

Zwischen der Oberseite der Kreisscheibe 22 des Unterteils 4 und der Innenseite der Deckfläche 20 des Deckelteils 2 ist ein Belüftungsfilter 36 aufgenommen. Dieser weist, wie üblich, ein hohlzylinderförmiges Filtermedium 38 auf, das zwischen Endkappen 40 und 42 angeordnet ist. An der Innenseite des Filtermediums 38 liegt eine fluiddurchlässige Stützstruktur 44 an, die den inneren Filterhohlraum umgibt, der mit dem Durchgang 28 des Einschraubkörpers 30 in Verbindung ist. Der Raum an der Außenseite des Filtermediums 38 ist mit der Außenatmosphäre über einen Be- und Entlüftungsdurchgang 46 verbunden, der in der Kreisscheibe 22 des Unterteils 4 gebildet ist und an der Unterseite der Kreisscheibe 22 zur Atmosphäre offen ist. Durch diese Platzierung ist die Mündung des Durchgangs 46 gegen Spritzwasser oder Schmutzeintrag von oben her geschützt.

Eine Sicherheitseinrichtung, mittels deren das Deckelteil 2 und das Unterteil 4 gegen eine Relativdrehung verriegelbar sind, weist einen Verriegelungsstift 48 auf, der in einer Bohrung 50, die sich zur Hochachse 6 achsparallel erstreckt, frei verschiebbar geführt ist. Die Bohrung 50 befindet sich in einem Ansatz 52, der sich in sich nach oben verjüngender Form von einem Außenrandbereich der Kreisscheibe 22 des Unterteils 4 entlang der Seitenwand 8 des Deckelteils 2 nach oben erstreckt. Mit seinem oberen Ende 54 endet der Ansatz 52 unmittelbar unterhalb eines Innenringes 56, der an der Unterseite der Deckfläche 20 die obere Endkappe 40 des Filters 36 umgibt.

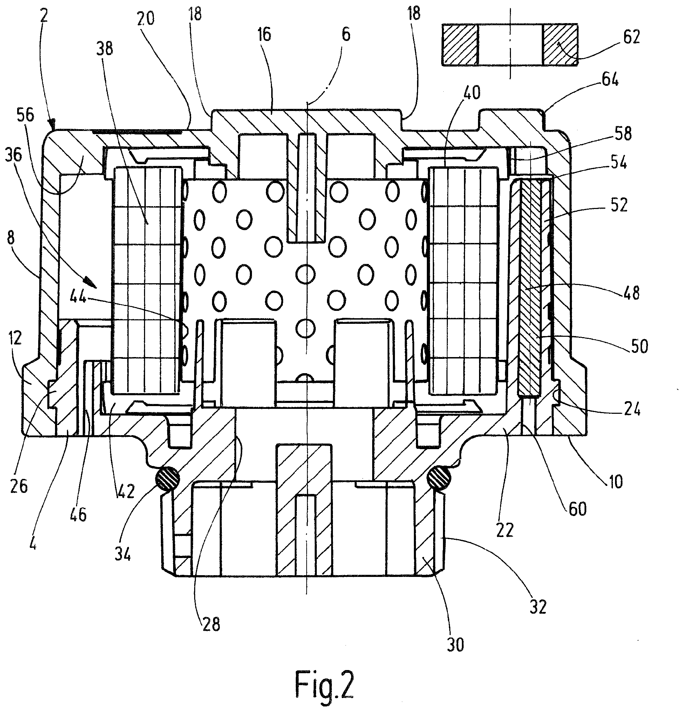

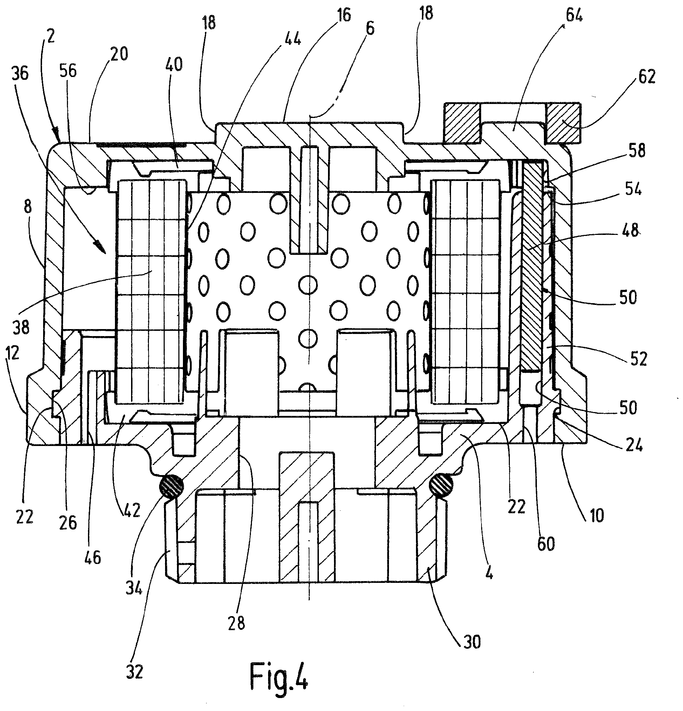

In einer Position, die von einem Seitenrand 18 der Leiste 16 des Deckteils 20 den größten Abstand besitzt, befindet sich an der Unterseite des Innenringes 56 eine kreiszylindrische Vertiefung 58, die die Aufnahme für das Ende des Verriegelungsstiftes 48 bildet, wenn sich dieser aus der in Fig. 2 gezeigten Position, die der freigebenden Funktionsstellung entspricht, in die in Fig. 3 und 4 gezeigte Position bewegt hat, die der verriegelnden Funktionsstellung entspricht. Der ferromagnetische Verriegelungsstift 48 ist in der Bohrung 50, die einen zur Unterseite offenen, im Durchmesser verjüngten Endabschnitt 60 besitzt, frei beweglich geführt, so dass er durch eine an der Oberseite des Deckelteils 2 wirkende Magnetkraft aus der in Fig. 2 gezeigten Position nach oben bewegbar ist.

Bei Drehen des Deckelteils 2 in eine Drehposition, bei der die Vertiefung 58 im Innenring 56 auf die Bohrung 50 ausgerichtet ist, kommt bei wirkender Magnetkraft der Verriegelungsstift 48 mit der Vertiefung 58 in Eingriff und bildet die Drehverriegelung zwischen Deckelteil 2 und Unterteil 4. Als magnetfelderzeugende Einrichtung ist ein Magnetring 62 vorgesehen, der für den Verriegelungsvorgang auf die Oberseite der Deckfläche 20 des Deckelteils 2 auflegbar ist. Als Markierung für das Aufsetzen des Magnetringes 62 ist an der Deckfläche 20 ein kreiszylindrischer Vorsprung 64 vorgesehen, der in die Ringöffnung des aufgesetzten Magnetringes 62 eingreift.

Bei aufgesetztem Magnetring 62 und wirksamer Drehverriegelung kann die Verschlussvorrichtung durch Drehen des Deckelteils 2 in den (nicht gezeigten) Befüllstutzen des betreffenden Fluidbehälters eingeschraubt oder von diesem abgeschraubt werden. Bei Wegnahme des Magnetringes 62 von der Deckfläche 20, wie es in Fig. 1 und 2 gezeigt ist, bewegt sich der Verriegelungsstift 48 unter Schwerkraftwirkung in der Bohrung 50 nach unten in die in Fig. 1 und 2 gezeigte freigebende Stellung, bei der das Deckelteil 2 relativ zum Unterteil 4 frei drehbar ist und dadurch ein nicht autorisiertes Abschrauben der Verschlussvorrichtung verhindert ist.

## Patentansprüche

1. Verschlussvorrichtung für einen Fluidbehälter, insbesondere einen Hydrauliktank, mit einem an dessen Behälteröffnung anbringbaren Unterteil (4) und einem Deckelteil (2), das in einer freigebenden Funktionsstellung frei drehbar auf dem Unterteil (4) gehalten ist und in einer weiteren,
verriegelnden Funktionsstellung mittels einer Sicherheitseinrichtung (48, 50, 58) unter Verbindung von Deckel- (2) mit Unterteil (4) die Freigabe der Behälteröffnung ermöglicht, wobei die Sicherheitseinrichtung (48, 50, 58) durch eine magnetfelderzeugende Einrichtung (62) betätigbar ist, die mittels Magnetkraft die weitere, verriegelte Funktionsstellung von Deckel- (2) mit Unterteil (4) herstellt,
**dadurch gekennzeichnet,**
**dass** das Deckelteil (2) eine Belüftungs- und/oder eine Filtereinrichtung (36) umschließt; und
**dass** für die Verbindung zwischen Deckelteil (2) und Unterteil (4) das Deckelteil (2) in der Nähe eines Öffnungsrandes (10) eine sich an der Innenseite über den gesamten Umfang erstreckende, radial vertiefte Ringnut (24) aufweist, die mit einem am Unterteil (4) radial vorstehenden Ringkörper (26) verklipt ist.

2. Verschlussvorrichtung nach Anspruch 1, **dadurch gekennzeichnet, dass** die Sicherheitseinrichtung (48, 50, 58) ein Verriegelungsteil (48) aufweist, das in der einen Funktionsstellung entriegelt in einer Aufnahme (50) im Unterteil (4) verschiebbar geführt ist und in der weiteren Funktionsstellung unter Einwirkung der Magnetkraft zumindest teilweise aus der Aufnahme (50) herausfahrend in verriegelnden Eingriff mit einer zuordenbaren Aufnahme (58) im Deckelteil (2) gelangt.

3. Verschlussvorrichtung nach Anspruch 2, **dadurch gekennzeichnet, dass** die magnetfelderzeugende Einrichtung (62) von außen her auf das Deckelteil (2) aufgesetzt das Verriegelungsteil (48) von seiner einen Funktionsstellung in die weitere Funktionsstellung bringt.

4. Verschlussvorrichtung nach Anspruch 2 oder 3, **dadurch gekennzeichnet, dass** ohne die von der magnetfelderzeugenden Einrichtung (62) ausgeübte Magnetkraft das Verriegelungsteil (48) schwerkraftbedingt von der weiteren verriegelten in die eine entriegelte Funktionsstellung gelangt.

5. Verschlussvorrichtung nach einem der Ansprüche 2 bis 4, **dadurch gekennzeichnet, dass** das Verriegelungsteil aus einem metallischen Verriegelungsstift (48) gebildet ist, dass die Aufnahmen für den Verriegelungsstift aus zylindrischen, in Deckung miteinander bringbaren Führungen (50, 58) gebildet sind, und dass die magnetfelderzeugende Einrichtung aus einem Permanentmagneten (62) gebildet sein kann.

6. Verschlussvorrichtung nach einem der vorstehenden Ansprüche, **dadurch gekennzeichnet, dass** im verriegelten Zustand, bei dem Deckelteil (2) und Unterteil (4) miteinander zumindest drehfest verbunden sind, mit einer Aufschraubbewegung des Deckelteils (2) das Unterteil (4) in einen Befüll- oder Entnahmestutzen des Fluidbehälters einschraubbar und mit entgegengesetzter Drehrichtung des Deckelteils (2) in einer Abschraubbewegung aus dem Stutzen unter Freigabe der Behälteröffnung abschraubbar ist.

7. Verschlussvorrichtung nach Anspruch 5 oder 6, **dadurch gekennzeichnet, dass** der Permanentmagnet (62) auf oder entlang einer Markierung (64) des Deckelteils (2) auf dieses aufsetzbar ist.

8. Verschlussvorrichtung nach Anspruch 7, **dadurch gekennzeichnet, dass** die Markierung am Deckelteil (2) eine Aufnahmemöglichkeit (64) für den Permanentmagneten ausbildet, der vorzugsweise als Magnetring (62) ausgebildet ist.

9. Verschlussvorrichtung nach einem der vorstehenden Ansprüche, **dadurch gekennzeichnet, dass** das Deckelteil (2) von außen her das Unterteil (4) derart übergreift, dass der Deckelabschluss (10) abstandsfrei in einen Gewindeeingriff (32) des Unterteils (4) in den Stutzen derart übergeht, dass ein Angriff von Werkzeugen am Unterteil (4) verhindert ist.

10. Verschlussvorrichtung nach einem der vorstehenden Ansprüche, **dadurch gekennzeichnet, dass** das Unterteil (4) die Belüftungs- und die Filtereinrichtung (36) mit aufnimmt.

## Claims

1. Closure device for a fluid container, in particularly a hydraulic tank, with a lower part (4) that can be attached to the container opening thereof, and a lid part (2), which is held in an unblocking functional position such that it can rotate freely on the lower part (4) and, in a further locking functional position, enables the container opening to be unblocked by means of a safety apparatus (48, 50, 58) connecting the lid part (2) and the lower part (4), the safety apparatus (48, 50, 58) being able to be actuated by an apparatus (62) generating a magnetic field, which creates the other, locked functional position of the lid part (2) with the lower part (4) by means of magnetic force, **characterised in that** the lid part (2) surrounds a ventilation and/or filter apparatus (36); and **in that**, for connecting the lid part (2) and the lower part (4), the lid part (2), in the vicinity of the opening edge (10), comprises a radially depressed annular groove (24) extending over the entire circumference on the inside, said groove being clipped with an annular body (26) protruding radially on the lower part (4).

2. Closure device according to claim 1, **characterised in that** the safety apparatus (46, 50, 58) comprises a locking part (48), which is mounted such that it can be displaced, unlocked in one functional position, in a receptacle (50) in the lower part (4) and, in the other functional position, moving at least partially out of the receptacle (50) under the effect of magnetic force, enters into a locking engagement with an assignable receptacle (58) in the lid part (2).

3. Closure device according to claim 2, **characterised in that** the apparatus (62) generating the magnetic field, when placed from outside onto the lid part (2), moves the locking part (48) from one functional position thereof into the other functional position.

4. Closure device according to either claim 2 or claim 3, **characterised in that**, without the magnetic force exerted by the apparatus (62) generating the magnetic field, the locking part (48) moves from the other locked position into the unlocked functional position by means of gravity.

5. Closure device according to any one of claims 2 to 4, **characterised in that** the locking part is formed by a metal locking pin (48), **in that** the receptacles for the locking pin are formed by cylindrical guides (50, 58) that can be brought together such that they cover one another, and **in that** the apparatus generating the magnetic field can be formed by a permanent magnet (62).

6. Closure device according to any one of the preceding claims, **characterised in that**, in the locked state, in which the lid part (2) and lower part (4) are connected to one another at least so that they cannot rotate, the lower part (4) can be screwed into a filling or extraction nozzle of the fluid container with a screwing-on motion of the lid part (2), and, when the lid part (2) is rotated in the opposite direction in a screwing-off motion, can be screwed out of the nozzle, releasing the container opening.

7. Closure device according to either claim 5 or claim 6, **characterised in that** the permanent magnet (62) can be placed onto the lid part on or along a marking (64) on the lid part (2).

8. Closure device according to claim 7, **characterised in that** the marking on the lid part (2) forms a receiving means (64) for the permanent magnet, which is preferably designed as a magnetic ring (62).

9. Closure device according to any one of the preceding claims, **characterised in that** the lid part (2) extends over the lower part (4) from outside, **in that** the lid closure (10) transitions into a threaded engagement (32) of the lower part (4) in the nozzle without leaving any space such as to prevent tools accessing the lower part (4).

10. Closure device according to any one of the preceding claims, **characterised in that** the lower part (4) incorporates the ventilation and filter apparatus (36).

## Revendications

1. Dispositif de fermeture d'un récipient de fluide, notamment d'un réservoir hydraulique, comprenant une partie (4) inférieure pouvant être mise sur son ouverture de récipient et une partie (2) formant couvercle, qui, dans une position de fonctionnement en dégagement, est maintenue avec possibilité de tourner librement sur la partie (4) inférieure et, dans une autre position de fonctionnement en verrouillage, rend possible au moyen d'un dispositif (48, 50, 58) de sécurité, avec liaison de la partie (2) formant couvercle à la partie (4) inférieure, de dégager l'ouverture du récipient, dans lequel le dispositif (48, 50, 58) de sécurité peut être actionné par un dispositif (62) produisant un champ magnétique, qui, au moyen de la force magnétique, donne l'autre position de fonctionnement en verrouillage de la partie (2) formant couvercle avec la partie (4) inférieure,
**caractérisé**
**en ce que** la partie (2) formant couvercle entoure un dispositif (36) de ventilation et/ou de filtration et
**en ce que**, pour la liaison pour la partie (2) formant couvercle et la partie (4) inférieure, la partie (2) formant couvercle a, à proximité d'un bord (10) de l'ouverture, une rainure (24) annulaire, qui s'étend sur tout le pourtour sur la face intérieure, qui s'approfondit radialement et qui est clipsée avec un corps (26) annulaire en saillie radialement à la partie (4) inférieure.

2. Dispositif de fermeture suivant la revendication 1, **caractérisé en ce que** le dispositif (48, 50, 58) de sécurité a une partie (48) de verrouillage, qui, déverrouillée dans la une position de fonctionnement, est guidée à coulissement dans un logement (50) de la partie (4) inférieure et qui, dans l'autre position de fonctionnement, arrive, sous l'effet de la force magnétique, en sortant au moins en partie du logement (50), en prise à verrouillement avec un logement (58), pouvant être associé, de la partie (2) formant couvercle.

3. Dispositif de fermeture suivant la revendication 2, **caractérisé en ce que** le dispositif (62) produisant un champ magnétique, mis de l'extérieur sur la partie (2) formant couvercle, met la partie (48) de verrouillage de sa une position de fonctionnement dans l'autre position de fonctionnement.

4. Dispositif de fermeture suivant la revendication 2 ou 3, **caractérisé en ce que**, sans la force magnétique appliquée par le dispositif (62) produisant un champ magnétique, la partie (48) de verrouillage passe par la force de gravité de l'autre position de fonctionnement verrouillée à la une position de fonctionnement déverrouillée.

5. Dispositif de fermeture suivant l'une des revendications 2 à 4, **caractérisé en ce que** la partie de verrouillage est formée d'une tige (48) métallique de verrouillage, **en ce que** les logements pour la tige de verrouillage sont constitués de guidages (50, 58) cylindriques pouvant être mis en coïncidence l'un avec l'autre et **en ce que** le dispositif produisant un champ magnétique peut être formé d'un aimant (62) permanent.

6. Dispositif de fermeture suivant l'une des revendications précédentes, **caractérisé en ce que**, dans l'état verrouillé, dans lequel la partie (2) formant couvercle et la partie (4) inférieure sont reliées entre elles au moins d'une manière solidaire en rotation, par un mouvement de vissage de la partie (2) formant couvercle, la partie (4) inférieure peut être vissée dans une tubulure de remplissage ou de prélèvement du récipient de fluide et, par un sens de rotation contraire de la partie (2) formant couvercle, dans un mouvement de dévissage, peut être dévissée de la tubulure en dégageant l'ouverture du récipient.

7. Dispositif de fermeture suivant la revendication 5 ou 6, **caractérisé en ce que** l'aimant (62) permanent peut être mis sur la partie (2) formant couvercle, sur ou le long d'un repérage (64) de la partie (2) formant couvercle.

8. Dispositif de fermeture suivant la revendication 7, **caractérisé en ce que** le repérage de la partie (2) formant couvercle constitue une possibilité (64) de réception de l'aimant permanent, lequel est constitué de préférence sous la forme d'un aimant (62) annulaire.

9. Dispositif de fermeture suivant l'une des revendications précédentes, **caractérisé en ce que** la partie (2) formant couvercle chevauche de l'extérieur la partie (4) inférieure de manière à ce que la fermeture (10) du couvercle se transforme sans distance en une pénétration (32) filetée de la partie (4) inférieure dans la tubulure de manière à empêcher à la partie (4) inférieure une attaque par des outils.

10. Dispositif de fermeture suivant l'une des revendications précédentes, **caractérisé en ce que** la partie (4) inférieure reçoit le dispositif (36) de ventilation et de filtrage.
